# EUROPÄISCHE PATENTSCHRIFT

(11) **EP 1 835 164 B1**
(45) Veröffentlichungstag und Bekanntmachung des Hinweises auf die Patenterteilung: **25.12.2019**
(21) Anmeldenummer: 07003700.7
(22) Anmeldetag: 23.02.2007
(51) Int. Cl.: F02G 5/02, F01N 5/02, F02C 6/12

(54) **Fahrzeug oder stationäre Kraftanlage mit einer aufgeladenen Brennkraftmaschine als Antriebswelle**
Vehicle or stationary power installation with a loaded combustion engine as a drive shaft
Véhicule ou centrale stationnaire doté(e) d'un moteur à combustion interne chargé comme arbre d'entraînement

(30) Priorität: 15.03.2006 DE 102006011797
(43) Veröffentlichungstag der Anmeldung: 19.09.2007
(60) Teilanmeldung: 19187027.8
(73) Patentinhaber: MAN Truck & Bus SE, 80995 München (DE)
(72) Erfinder: Stiermann, Erwin, Dipl.-Ing. (FH), 86356 Neusäss (DE)
(74) Vertreter: Liebl, Thomas

(56) Entgegenhaltungen:
- EP-A1- 0 634 565
- WO-A1-2006/025110
- WO-A2-00/31400
- DE-A1- 10 025 500
- DE-A1- 10 344 868
- DE-B1- 2 625 745
- GB-A- 2 414 690
- JP-A- S59 188 058
- JP-A- 2001 207 857
- JP-U- H0 421 724
- JP-U- S6 252 238
- JP-U- 56 173 724

## Beschreibung

Die Erfindung bezieht sich auf ein Fahrzeug oder eine stationäre Kraftanlage mit Merkmalen gemäß Anspruchs 1. DE 100 25 500 A1 beschreibt ein Fahrzeug gemäß dem Oberbegriff des Anspruchs 1.

In einem Fahrzeug oder einer stationären Kraftanlage gibt es an der die Antriebsquelle bildenden Brennkraftmaschine und in deren Umfeld eine Reihe von Komponenten und Einrichtungen wie Kurbelgehäuse, Zylinderköpfe, Kühler, Behälter, die von einem in einem geschlossenen Kreislauf aufgenommenen Medium durchströmt werden. Im Falle eines Kühlkreislaufes ist es bekannt, zur Verbesserung des Kaltstartverhaltens der Brennkraftmaschine und einer schnelleren Verfügbarkeit von Heizungswärme elektrische Zusatzeinrichtungen vorzusehen, mit denen das Kühlmittel aufheizbar ist. Diese elektrischen Zusatzheizungen sind meist relativ teuer und belasten aufgrund ihres hohen Energiebedarfs die energieliefernde Batterie. Solche elektrische Zusatzheizungen sind z. B. auch für solche Fälle vorgesehen, wenn der Kühlwasserkreislauf der Brennkraftmaschine auch zur Auftauung einer in einem Behälter bevorrateten, bei Temperaturen unter ca. -12°C eingefrorenen Harnstoffwasserlösung (dient als Ammoniaklieferant für NOₓ-Reduktion in SCR-Katalysatoren) herangezogen wird. Da die Batterie insbesondere bei über einen längeren Zeitraum oder in bestimmten Weltregionen ohnehin immer vorherrschenden tiefen Minustemperaturen stark belastet ist, sind elektrische Zusatzheizungen für eine Kühlwasseraufheizung nach Möglichkeit nur so lange wie unbedingt erforderlich in Betrieb zu nehmen. Für den Rest der Brennkraftmaschinen- oder Fahrzeugbetriebszeit werden sie nicht benötigt.

Es ist daher Aufgabe der Erfindung, für ein Fahrzeug oder eine stationäre Anlage der gattungsgemäßen Art Mittel bereitzustellen, die es ermöglichen, dass auf elektrische Zusatzheizungen zur Erwärmung eines in einem geschlossenen Kreislauf aufgenommenen Mediums verzichtet werden kann.

Diese Aufgabe ist erfindungsgemäß entsprechend dem Kennzeichen des Anspruchs 1 dadurch gelöst, dass die Turbine des Abgasturboladers als Heizquelle herangezogen und/oder ausgebildet ist und hierzu außen am Turbinengehäuse ein Wärmetauscher angeordnet ist, der in den Medium-Kreislauf eingebunden oder einschaltbar ist und in dessen Innenraum das direkt oder kanalisiert hindurchgeleitete Medium unter Ausnutzung wenigstens der thermischen Abstrahlungsenergie des heißen Turbinengehäuses aufheizbar ist.

Vorteilhafte Ausgestaltungen und Weiterbildungen dieser erfindungsgemäßen Lösung sind in den Unteransprüchen angegeben.

Die Erfindung geht von der Tatsache aus, dass es sich bei der Turbine des Abgasturboladers einer Brennkraftmaschine nach deren Kaltstart um das am schnellsten warm bzw. heiß werdende und Wärme abstrahlende Aggregat handelt. Bis dato ist die Abwärme der Turbine, insbesondere wenn diese im Volllastbetrieb nahezu rotglühend ist, eher als hinderlich betrachtet worden. Im Umfeld der heißen Turbine angeordnete Fahrzeugteile wurden durch Isolationswände oder Hitzeschilde gegen zu starke Hitzewirkung abgeschottet. Außerdem wurde die Turbine intensiv gekühlt. Die Erfindung dagegen macht sich die rasche Erwärmung der Turbine zunutze, indem sie nun ganz gezielt als Heizquelle für ein zu beheizendes Medium herangezogen wird. Dies geschieht über einen Wärmetauscher, der außen am Turbinengehäuse angeordnet ist. Durch dessen Innenraum kann das aufzuheizende Medium entweder direkt oder kanalisiert hindurchgeleitet werden. Bei der direkten Hindurchleitung nimmt das Medium vom heißen Turbinengehäuse Wärme auf, je nach Verweildauer im Wärmetauscherinnenraum oder Durchströmgeschwindigkeit mehr oder weniger. Wenn das aufzuheizende Medium kanalisiert durch den Innenraum des Wärmetauschers hindurchgeleitet wird, besteht die Möglichkeit, in den Wärmetauscherinnenraum zusätzlich Abgas der Brennkraftmaschine einzuspeisen bzw. durch ihn hindurchzuleiten, sodass auch der Wärmeinhalt des Abgases zusätzlich zur Abstrahlungsenergie des Turbinengehäuses für die Aufheizung des Mediums heranziehbar ist.

Der Wärmetauscher kann auf verschiedene Art ausgebildet und/oder am Turbinengehäuse angeordnet sein. Über einige dieser Ausführungsformen und Ausgestaltungen geben die Zeichnung und zugehörige Figurenbeschreibung Auskunft.

Die erfindungsgemäße Art der Erwärmung bzw. Erhitzung des Mediums lässt wegen der möglichen hohen Energieeinbringung - verbunden sogar mit einem Wechsel des Aggregatszustands von flüssig in dampfförmig - verschiedenste Nutzungen dieses solchermaßen erhitzten Mediums zu. Ein solcher Anwendungsfall ist z. B. die rasche Aufwärmung des flüssigen Kühlmittels (Wasser oder mit Frostschutzmittel gemischtes Kühlwasser) einer Brennkraftmaschine nach deren Kaltstart. In anderen Anwendungsfällen wird das aufgeheizte Medium über einen in den Medium-Kreislauf eingebundenen oder eingeschalteten Wärmeabnehmer wie Behälter geleitet, so dass die darin bevorratete oder befindliche Flüssigkeit erwärmbar oder aufheizbar oder am Einfrieren hinderbar oder nach einem Kaltstart der Brennkraftmaschine schnell auftaubar ist. Bei diesem Wärmeabnehmer kann es sich beispielsweise um einen Vorratsbehälter für eine Harnstoffwasserlösung oder eine Windschutzscheiben-, Scheinwerfer- und/oder Außenspiegelreinigungsflüssigkeit oder einen kühlwasserführenden Kühler oder den Kühlwasserausgleichsbehälter handeln. Aber auch elektrische Speicher-Batterien oder Fahrzeugheizungen sind mit dem erfindungsgemäß aufgeheizten Medium beheizbar. Das erfindungsgemäß aufgeheizte Medium kann z. B. aber auch in einem Reiseomnibus oder Wohnmobil dem Warmwasserbehälter der Bordküche oder dem Spülwasservorratsbehälter der Bordtoilette zwecks Aufheizung bzw. Warmhaltung oder als Einfrierschutz zugeführt werden. Ferner kann das Medium, wenn es sich bei diesem um eine niedrig-siedende Flüssigkeit handelt, die bei Durchströmen des turbinenseitigen Wärmetauschers vom flüssigen in seinen dampfförmigen Aggregatzustand überführt und in diesem dampfförmigen Zustand einer Dampfturbine zugeführt werden, von der es leistungsabgebend in mechanische Antriebsenergie umsetzbar ist.

Weitere Anwendungsfälle ergeben sich aus den Unteransprüchen und der Figurenbeschreibung.

Nachfolgend ist die Erfindung anhand mehrerer in der Zeichnung dargestellter Ausführungs- und Anwendungsbeispiele noch näher erläutert. In der Zeichnung zeigen:
- Fig. 1: einen Längsschnitt durch einen Abgasturbolader mit einem Beispiel eines Wärmetauschers,
- Fig. 2: einen Längsschnitt durch einen anderen Abgasturbolader eines weiteren Beispiels eines Wärmetauschers,
- Fig. 3: einen Querschnitt (schematisiert) durch die Turbine des Abgasturboladers gemäß Fig. 2 im Bereich des Wärmetauschers,
- Fig. 4 und 5: schematisiert je eine Seitenansicht eines Abgasturboladers mit je einem weiteren Beispiel des Wärmetauschers,
- Fig. 6 bis 10: jeweils ein Beispiel einer Anwendung eines Medium-Kreislaufs, in den der erfindungsgemäße Wärmetauscher eingebunden bzw. einschaltbar ist.

In den Figuren ist - soweit dargestellt - mit 1 eine Brennkraftmaschine, insbesondere Dieselmotor, bezeichnet, die mittels eines Abgasturboladers 2 aufgeladen ist. Diese aufgeladene Brennkraftmaschine 1 bildet in einem Fahrzeug oder einer stationären Kraftanlage die Antriebsquelle. Bei dem Fahrzeug kann es sich um einen Personenkraftwagen, ein Nutzfahrzeug jeglicher Art, ein Schienenfahrzeug, Wasser- oder Luftfahrzeug handeln. Bei der stationären Kraftanlage kann es sich z. B. um ein Notstromaggregat (Diesel-Generator-Set), ein Blockheizkraftwerk (Diesel-Generator-Dampferzeugungs-Set), ein Hebewerk oder jede andere industrielle Anlage handeln, in der eine Brennkraftmaschine antriebswirksam eingesetzt ist. Das Fahrzeug oder die stationäre Kraftanlage weisen Komponenten auf, die einer Erwärmung, Beheizung oder Warmhaltung bedürfen und von einem in einem geschlossenen Kreislauf 3, 3' aufgenommenen Medium her mit Wärme versorgbar sind. Der Abgasturbolader 2 besteht aus einer Abgasturbine 4 und einem Ladeluftverdichter 5. Die Abgasturbine 4 steht über einen Abgaskrümmer 6 mit den Abgasauslässen der Brennkraftmaschine in Kommunikation und erhält Abgas in Richtung des Pfeils A zugeführt. Die Verbindung zwischen Abgasturbine 4 und Abgaskrümmer 6 ist über Flansche 7, 8 hergestellt, wobei der Flansch 7 am Eingang 9 des Turbinengehäuses 10 und der Flansch 8 am zugewandten Ende des Abgaskrümmers 6 angeordnet und die Verbindung der beiden Flansche 7, 8 über Schraubverbindungen 11 hergestellt ist. Der Ladeluftverdichter 5 versorgt über eine Ladeluftsammelleitung die Einlässe der Brennkraftmaschine 1.

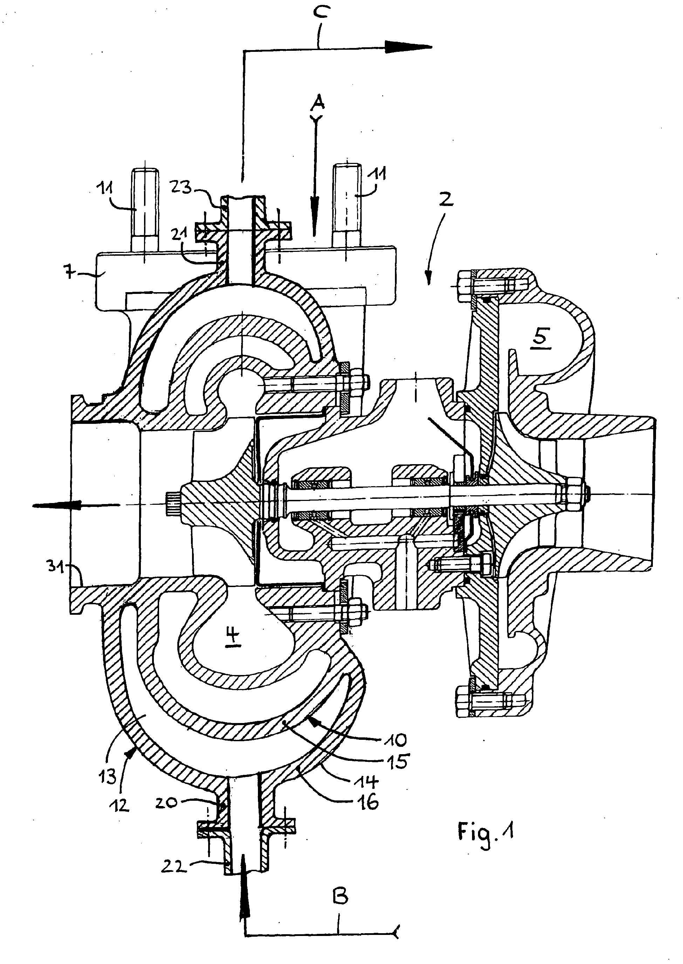

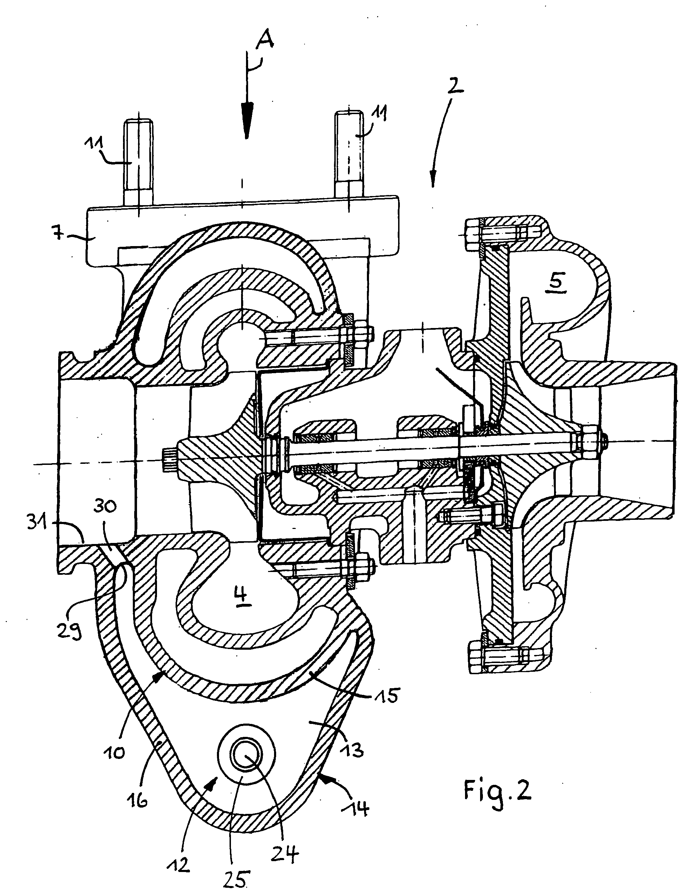

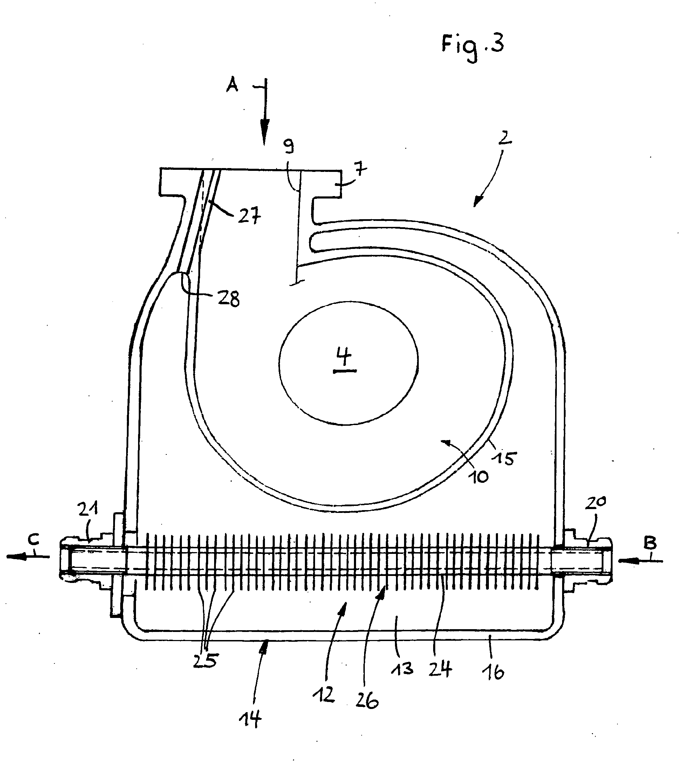

Erfindungsgemäß ist die Turbine 4 des Abgasturboladers 2 als Heizquelle für das Medium herangezogen und/oder ausgebildet. Hierzu ist außen am Turbinengehäuse 10 ein Wärmetauscher 12 angeordnet, der in den Medium-Kreislauf 3 eingebunden oder einschaltbar ist und in dessen Innenraum 13 das direkt oder kanalisiert hindurchgeleitete Medium unter Ausnutzung wenigstens der thermischen Abstrahlungsenergie des heißen Turbinengehäuses 10 aufheizbar ist. Beispiele für die direkte Hindurchleitung des Mediums durch den Innenraum 13 des Wärmetauschers 12 sind in den Figuren 1, 4 und 5 gezeigt. Die Figuren 2 und 3 dagegen zeigen ein Beispiel für eine kanalisierte bzw. verrohrte Hindurchführung des Mediums durch den Innenraum 13 des Wärmetauschers 12.

Insbesondere dann, wenn das aufzuheizende Medium kanalisiert oder verrohrt durch den Innenraum 13 des Wärmetauschers 12 hindurchgeleitet wird, bietet es sich an, zusätzlich Abgas in den Wärmetauscher-Innenraum 13 einzuspeisen bzw. durch diesen hindurchzuleiten und dabei den Wärmeinhalt des Abgases zusätzlich zur Aufheizung des Mediums mit heranzuziehen.

Der Wärmetauscher 12 kann auf verschiedene Art und Weise außen am Turbinengehäuse 10 realisiert sein.

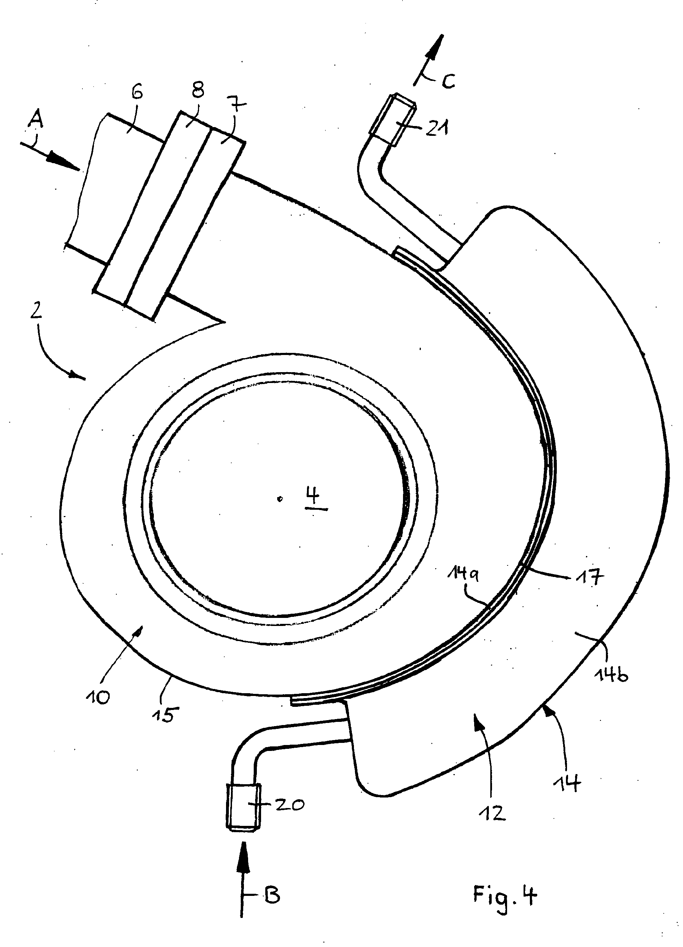

Beispielsweise kann der Wärmetauscher 12 als integraler Bestandteil der Abgasturbine 4 realisiert und hierzu das Gehäuse 14 des Wärmetauschers 12 durch die Turbinengehäuse-Außenwand 15 und einer weitere, an dieser mit angegossene oder befestigte Gehäuseaußenwand 16 gebildet sein (siehe Fig. 1, 2 und 3). Bei einer gebauten Ausführungsform des Wärmetauschers 12 kann eine Außenwand 16 des Wärmetauscher-Gehäuses 14 in Schalenform aus hochwarmfesten Stahlblech durch Ausstanzen und Prägen hergestellt und dann außen an der Turbinengehäuse-Außenwand 15 z. B. durch Schweißen oder durch Spannbänder befestigt werden. Alternativ hierzu ist es aber auch möglich, den Wärmetauscher 12 mit einem Gehäuse 14 zu realisieren (siehe Fig. 4), das aus mehreren aus hochwarmfesten Stahlblech vorgefertigten Teilen 14a, 14b zusammengesetzt und dann mit seinem dem Turbinengehäuse 10 zugewandten Außenwand-Bereich 17 am vorgesehenen Außenbereich der Turbinengehäuse-Außenwand 15 - formmäßig an diese angepasst und für optimalen Wärmeübergang innig angeschmiegt - befestigt wird, z. B. durch Schweißen oder mittels Spannbändern oder dergleichen.

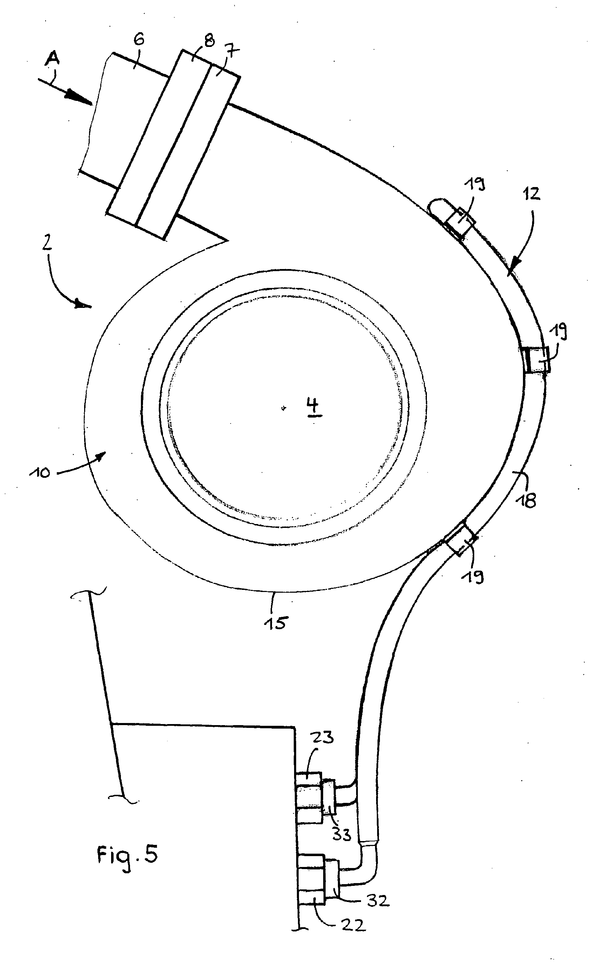

Alternativ hierzu kann der Wärmetauscher 12 aber auch durch ein Wärmetauscherrohr 18 gebildet sein, das - wie aus Fig. 5 ersichtlich - gebogen oder mäandernd am Turbinengehäuse 10 der Abgasturbine 4, dort am vorgesehenen Außenbereich - an diesen formschlüssig angepasst und für optimalen Wärmeübergang innig angeschmiegt - befestigt ist, z. B. durch mehrere Klammern bzw. Halter 19.

Bei den Ausführungsbeispielen gemäß Fig. 1 bis 4 sind am Gehäuse 14 des Wärmetauschers 12 ein erster Anschluss 20 und zweiter Anschluss 21 vorgesehen, wobei am ersten Anschluss 20 eine Zuleitung 22 für das aufzuheizende Medium (Pfeil B) und am zweiten, vom ersten (20) räumlich beabstandeten Anschluss 21 eine Abführleitung 23 für das aufgeheizte Medium (Pfeil C) angeschlossen ist. Über die Zuleitung 22 sowie die Abführleitung 23 ist der Wärmetauscher 12 in den Medium-Kreislaufs 3 eingebunden bzw. einschaltbar, wie weiter hinten noch näher erläutert.

Im Fall der Ausführungsbeispiele gemäß Fig. 1 und 4, die nicht Teil der Erfindung sind, ist das aufzuheizende Medium über die Zuleitung 22 und den ersten Anschluss direkt in den Innenraum 13 des Wärmetauscher-Gehäuses 14 einleitbar, wo es in Kontakt mit der heißen Außenwand 15 des Turbinengehäuses 10 (Fig. 1) oder dem von letzterer her aufgeheizten Gehäuse-Außenwandbereich 17 (Fig. 4) kommt und hierdurch aufheizbar ist sowie nach einer gewissen Verweilzeit aus dem Wärmetauscher-Gehäuse 14 über den zweiten Anschluss 21 wieder ausleitbar und über die Abführleitung 23 dem Mediumkreislauf 3 zur dortigen weiteren Verwendung zuführbar ist.

Im Falle des Beispiels gemäß Fig. 2, 3 erstreckt sich zwischen erstem Anschluss 20 und zweitem Anschluss 21 des Wärmetauschers 12 ein Wärmetauscherrohr 24, mit dem das aufzuheizende Medium kanalisiert bzw. verrohrt durch den Innenraum 13 des Wärmetauscher-Gehäuses 14 hindurchleitbar ist. Dabei kann sich das Wärmetauscherrohr 24 gerade oder in mäandernder Form zwischen den beiden Anschlüssen 20, 21 erstrecken. Außerdem kann das Wärmetauscherrohr 24 außen mit wärmeübertragenden Rippen 25 ausgestattet sein. Alternativ zu einem Einzelrohr 24 kann sich erfindungsgemäß zwischen erstem Anschluss 20 und zweitem Anschluss 21 des Wärmetauschers 12 aber auch ein zwischen zwei endseitig angeordneten Sammelräumen gefasstes Wärmetauscherrohrbündel erstrecken, das aus einer Anzahl von geraden, parallel verlaufenden Wärmetauscherrohren besteht, die gegebenenfalls außen noch jeweils verrippt sind.

Das Wärmetauscherrohr 24 oder das besagte Wärmetauscherrohrbündel kann Bestandteil einer Wärmetauscherkartusche 26 sein, die - wie z. B. aus Fig. 3 ersichtlich - auch die beiden Anschlüsse 20, 21 enthält und vorgefertigt in das Gehäuse 14 des Wärmetauschers 12 einbaubar ist und sich in Einbaulage dann zwischen Zuleitung 22 und Abführleitung 23 erstreckt.

Das Wärmetauscherrohr 24 bzw. das Wärmetauscherrohrbündel nehmen innerhalb des geschlossenen Wärmetauschergehäuses 14 die von der Außenwand 15 der Turbine 10 abgestrahlte Wärmeenergie auf. Wie schon weiter vorne erwähnt, kann die Heizleistung in Fällen der kanalisierten bzw. verrohrten Hindurchleitung des Mediums dadurch erhöht werden, dass Abgas in den Innenraum 13 des Wärmetauschers 12 eingespeist wird. Dieses Abgas ist aus dem Abgastrakt 6 vor dem oder im Eingang 9 der Abgasturbine 4 abzweigbar und kanalisiert, z. B. über eine turbinengehäuseinterne Bohrung 27, wie aus Fig. 3 ersichtlich, in den Innenraum 13 des Wärmetauscher-Gehäuses 14 einspeisbar. Dieses Abgas ist dann, nach einer gewissen wärmeabgebenden Verweildauer, aus dem Wärmetauscher 12 an einer von der Einleitstelle 28 entfernten Stelle 29, z. B. über eine turbinengehäuseinterne Bohrung 30, wie aus Fig. 2 ersichtlich, wieder ausleitbar und in den Abgastrakt 31 ausgangs bzw. nach Abgasturbine 4 einleitbar. Die Verweildauer des Abgases im Wärmetauscher kann mittelbar, z. B. durch einstellbare Drosseln in den Bohrungen 27, 30 oder durch Abstimmung der Querschnitte dieser Bohrungen 27, 30 festgelegt bzw. eingestellt werden.

Im Fall des Beispiels gemäß Fig. 5 weist das Wärmetauscherrohr 18 eingangs einen ersten Anschluss 32, an den die Zuleitung 22 für das aufzuheizende Medium befestigt ist, und ausgangs einen zweiten Anschluss 33 auf, an dem die Abführleitung 23 für das aufgeheizte Medium angeschlossen ist.

Unabhängig von seiner unterschiedlichen Ausgestaltung ist der Wärmetauscher 12 mit seiner Zuleitung 22 und Abführleitung 23 in den Medium-Kreislauf 3 bzw. 3' bedarfsweise einsteuerbar. Der Bedarf für diese Einschaltung wird z. B. am Ort, wo das aufgeheizte Medium wirksam werden soll, durch einen oder mehrere Temperatursensoren erfasst. Die Ein- und Aussteuerung des Wärmetauschers 12 in den Medium-Kreislauf 3 erfolgt z. B. durch schaltbare Umschaltventile 35, 36, die ihre Schaltbefehle von einer elektronischen Regel- und Steuereinrichtung (nicht dargestellt) her erhalten und die über einen Leitungsabschnitt 37 miteinander verbunden sind, der im Fall der Nichteinbindung des Wärmetauschers 12 diesen dann im Medium-Kreislauf 3, 3' als Bypass überbrückt.

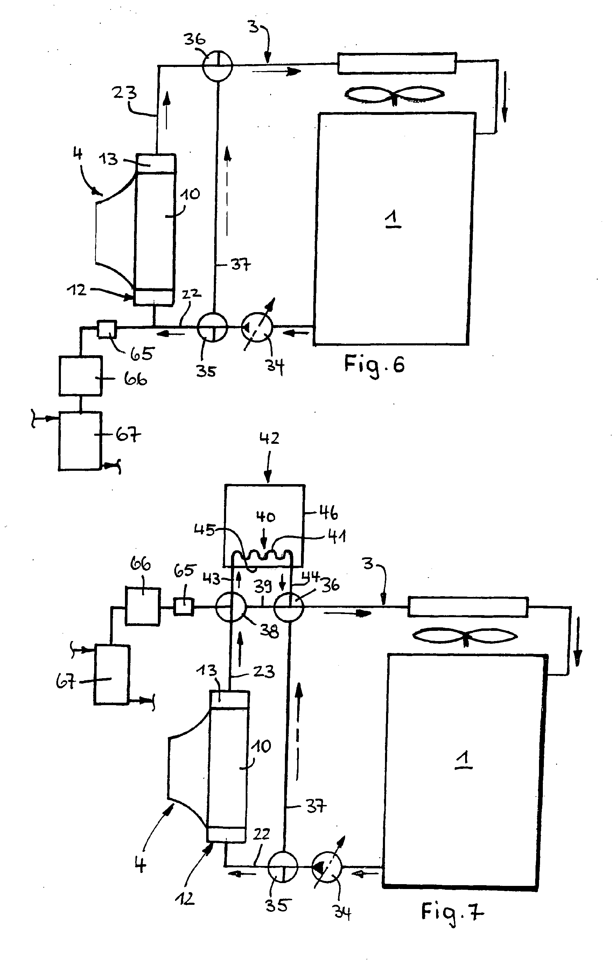

Nachfolgend ist unter Bezugnahme auf die Figuren 6 bis 10 auf verschiedene Medium-Kreisläufe 3, 3' sowie deren Ausgestaltung und Verwendung näher eingegangen.

Im Fall von Fig. 6 handelt es sich bei dem Medium-Kreislauf 3 um den Kühlkreislauf der Brennkraftmaschine 1 und bei dem darin befindlichen, mittels einer Pumpe 34 umgewälzten Medium um das flüssige Kühlmittel - Kühlwasser bzw. mit Frostschutzmittel gemischtes Kühlwasser - der Brennkraftmaschine 1. In diesen Kühlkreislauf 3 ist der erfindungsgemäße Wärmetauscher 12 bedarfsweise über die Umschaltventile 35, 36 einsteuerbar, dies z. B. immer dann, wenn eine rasche Erwärmung des Kühlmittels nach einem Kaltstart der Brennkraftmaschine 1 erforderlich ist. Diese Einschaltung des Wärmetauschers 12 in den Kühlkreislauf 3 erfolgt über eine temperaturgeführte Regelung/Steuerung mit entsprechender Einflussnahme auf die Schaltstellung der Umschaltventile 35, 36. Der Wärmetauscher 12 wird z. B. dann durch entsprechende Umschaltung der Umschaltventile 35, 36 wieder aus dem Kühlkreislauf herausgeschaltet, wenn das Kühlwasser hinreichend vorgewärmt ist.

Im Fall von Fig. 7 handelt es sich wie im Fall von Fig. 6 bei dem Medium-Kreislauf 3 ebenfalls um den Kühlkreislauf der Brennkraftmaschine 1 und bei dem darin mittels der Pumpe 34 umgewälzten Medium um Wasser bzw. mit Frostschutzmittel gemischtes Wasser. Zusätzlich ist hier ein drittes schaltbares Umschaltventil 38 vorgesehen, zu dem die Abführleitung 23 hinführt und das über einen Leitungsabschnitt 39 mit dem zweiten Umschaltventil 36 verbunden ist. Mit 40 ist ein Heizkreis bezeichnet, der aus einem Heizorgan 41 in bzw. an einem Wärmeabnehmer 42, einer vom Umschaltventil 38 abgehenden und mit dem Heizorgan 41 kommunizierenden Zuleitung 43 und einer vom Heizorgan 41 abgehenden Rückleitung 44 besteht, die zum Umschaltventil 36 hinführt. Dieser Heizkreis 40 dient zur Wärmeabgabe an den Wärmeabnehmer 42, bei dem es sich z. B. um einen Behälter handeln kann, in dem eine aufgenommene bzw. bevorratete Flüssigkeit zu erwärmen, warm zu halten, am Einfrieren zu hindern oder nach Einfrieren aufzutauen ist. Das Heizorgan 41 kann z. B. innerhalb des Wärmeabnehmers 42/Behälters knapp über dessen Boden 45 nach Art eines geraden oder gewendelten bzw. mäandernden Heizrohres oder durch ein in Vertiefungen des Bodens 45 oder der Wand 46 des Wärmeabnehmers 42/Behälters eingebettetes Heizrohr oder ein in das Material des Bodens 45 oder der Wand 46 des Wärmeabnehmers 42/Behälters integriertes Heizrohr gebildet sein. Dieser Heizkreis 40 ist bedarfsweise über die Umschaltventile 35, 36, 38 in Reihe zum Wärmetauscher 12 in den Medium-Kreislauf 3 - hier Kühlkreislauf der Brennkraftmaschine 1 - einschaltbar. Diese Aktivierung des Heizkreises 40 und Wärmetauschers 12 erfolgt temperaturgeführt, z. B. wenn mittels eines wärmeabnehmerseitigen oder -internen Sensors ein Heizbedarf festgestellt wird, durch eine Steuerung/Regelung mit entsprechender Einflussnahme auf die Schaltstellung der drei Umschaltventile 35, 36, 38. Wenn der Wärmetauscher 12 und der Heizkreislauf 40 in den Medium-Kreislauf 3 eingeschaltet sind, wird das Medium mittels der Pumpe 34 dem Wärmetauscher 12 zugeführt, dort aufgeheizt und dann dem Heizkreis 40 zugeführt, wo es wärmeabgebend Einfluss auf z. B. den Zustand der behälterinternen Flüssigkeit nimmt. Der Wärmetauscher 12 und der Heizkreis 40 werden dann durch entsprechende Umschaltung der Umschaltventile 35, 36, 38 wieder aus dem Medium-Kreislauf 3 herausgeschaltet, wenn vom z. B. behälterseitigen Temperatursensor ein Zustand der erwärmten Flüssigkeit gemeldet wird, der die Beheizung nicht mehr erfordert.

Anstelle in den brennkraftmaschinenseitigen Kühlkreislauf - wie vor anhand von Fig. 6 und 7 beschrieben -, kann der erfindungsgemäße Wärmetauscher 12 aber auch in einen autarken, von der Brennkraftmaschine 1 und deren Kühlkreislauf unabhängigen Medium-Kreislauf 3' eingeschaltet werden bzw. eingebunden sein. Bei dem in diesen Medium-Kreislauf 3' befindlichen Medium kann es sich beispielsweise um Wasser oder mit Frostschutzmittel gemischtes Wasser oder jede andere geeignete Flüssigkeit, z. B. auch eine niedrig-siedende Flüssigkeit wie ein Ammoniak-Wasser-Gemisch, handeln.

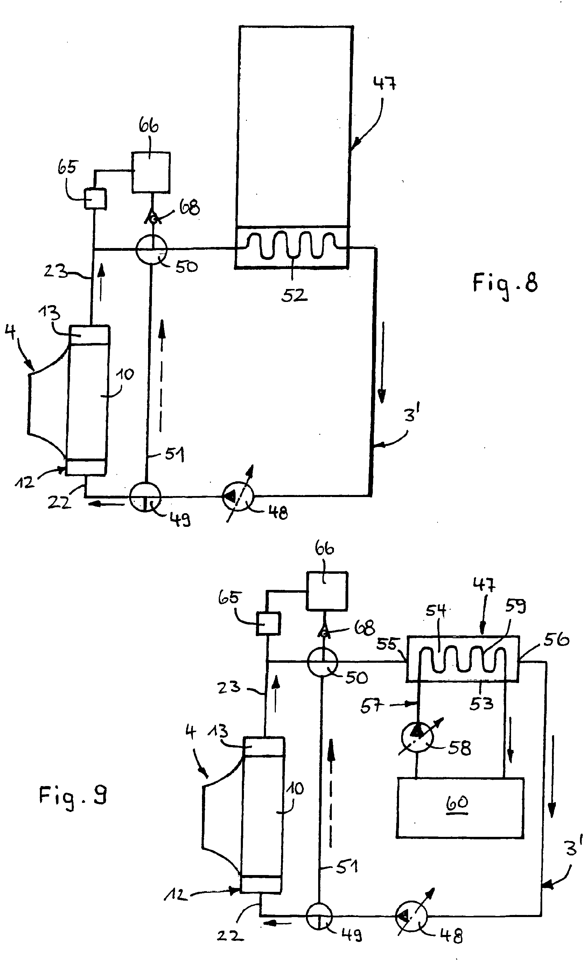

Beispiele solcher autarker Medium-Kreisläufe 3' sind in den Figuren 8 bis 10 dargestellt.

Jeder dieser Medium-Kreisläufe 3' führt durch oder über einen Wärmeabnehmer 47. Das im Medium-Kreislauf 3' eingeschlossene Medium wird mittels einer Pumpe 48 umgewälzt. Zwei Umschaltventile 49, 50, die durch einen Leitungsabschnitt 51 des Medium-Kreislaufs 3' miteinander verbunden sind, ermöglichen je nach Schaltstellung die Einschaltung des erfindungsgemäßen Wärmetauschers 12 in den Medium-Kreislauf 3' oder dessen Überbrückung über den dann als Bypass fungierenden Leitungsabschnitt 51. Im Fall von Fig. 8 ist als Wärmeabnehmer 47 ein eine Flüssigkeit beinhaltender bzw. bevorratender Behälter gezeigt, bei dem es sich ebenso wie bei jenem (42) gemäß Fig. 6 um einen solchen eines Fahrzeugs handeln kann, wie
- einen Vorratsbehälter für eine Harnstoffwasserlösung, die bei ca. -12°C einfrieren würde, oder
- einen Vorratsbehälter für eine Windschutzscheiben- und/oder Scheinwerfer- und/oder Außenspiegelreinigungsflüssigkeit, oder
- einen kühlwasserführenden Kühler, oder
- einen Kühlwasser aufnehmenden Ausgleichsbehälter, oder
- eine elektrische Speicher-Batterie, oder
- einen Heizkörper, oder
- einen Warmwasserbehälter, z. B. in Bordküchen von Omnibussen oder Wohnmobilen, oder
- einen Spülwasservorratsbehälter in Bordtoiletten von Omnibussen oder Wohnmobilen, oder
- einen zweiten Wärmetauscher, über den ein Sekundärmedium-Kreislauf führt.

Im bzw. am Wärmeabnehmer 47 gemäß Fig. 8 ist ein Heizrohr 52 vorgesehen, das in gleicher oder ähnlicher Weise wie das Heizrohr 41 von Fig. 7 ausgebildet, angeordnet oder wandintegriert ist. Die Aktivierung des Wärmetauschers 12 zum Zweck der Aufheizung des Mediums im Medium-Kreislauf 3' und einer Wärmeabgabe im Bereich des Wärmeabnehmers 47 erfolgt hier ähnlich wie im Beispiel von Fig. 7, also abhängig von einer mittels Sensor im bzw. am Wärmeabnehmer 47 erfassten Temperatur durch entsprechende Einflussnahme auf die Schaltstellung der beiden Umschaltventile 49, 50.

Im Fall des Beispiels gemäß Fig. 9 ist bei ansonstem gleichem Aufbau wie in Fig. 8 der Wärmeabnehmer 47 durch einen weiteren Wärmetauscher 53 gebildet, dessen von einem Gehäuse umfasster Innenraum 54 über einen Eingang 55 und Ausgang 56 in den Medium-Kreislauf 3' eingebunden und von darin befindlichem Medium durchströmbar ist. Durch den Wärmetauscher 53 ist ein Sekundärmedium-Kreislauf 57 hindurchgeführt, in dem ein mittels einer Pumpe 58 umgewälztes Sekundärmedium über ein im Innenraum 54 des Wärmetauschers 53 angeordnetes Wärmetauscherrohr oder-rohrbündel 59 leitbar ist, dem Wärme aus dem ersten Medium-Kreislauf 3' zuführbar ist. Dieses solchermaßen erwärmte Sekundärmedium wird im Sekundärmedium-Kreislauf 57 einem darin eingebundenen Wärmeabnehmer 60, wie einem Verbraucher oder Wärmespeicher oder flüssigkeitsbeinhaltenden Behälter, zugeführt. Im Prinzip könnte es sich bei dem Wärmeabnehmer 60 unter anderem auch um solche (42, 47) wie in Verbindung mit Fig. 7 und 8 genannte handeln.

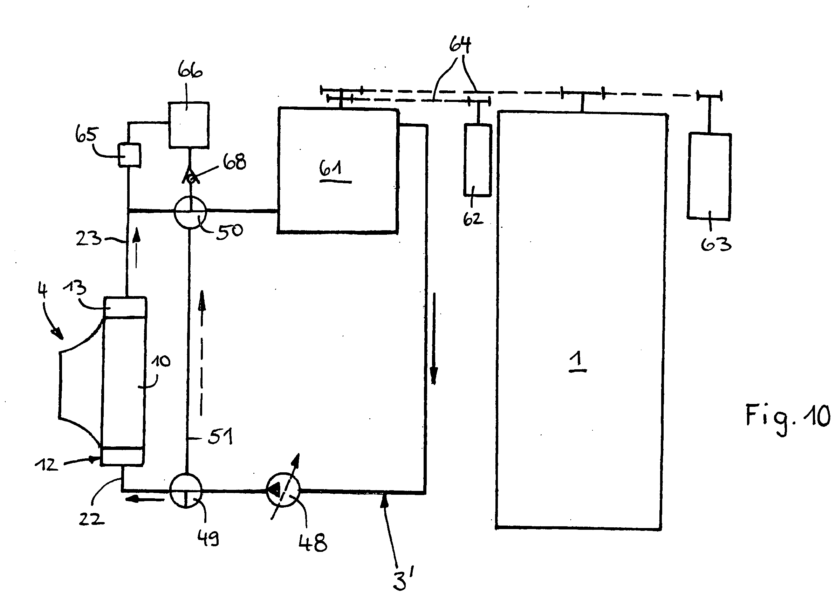

Anhand von Fig. 10 ist ein Anwendungsbeispiel beschrieben, bei dem als Medium eine niedrig-siedende Flüssigkeit zur Anwendung kommt, die in einem geschlossenen Medium-Kreislauf 3' aufgenommen ist und bei Durchströmen des erfindungsgemäßen Wärmetauschers 12 von ihrem normalerweise flüssigen in dampfförmigen Aggregatszustand überführbar ist. Der schaltungsmäßige Aufbau ist dabei ähnlich wie in Fig. 8. Bei dem Wärmeabnehmer 47 handelt es sich im Fall von Fig. 10 jedoch um eine Dampfturbine 61, der das im Wärmetauscher 12 in seinen dampfförmigen Aggregatzustand überführte Medium zuführbar und dort unter Entspannung und Abkühlung leistungsabgebend wirksam ist. Die Dampfturbine 61 ist antriebsmäßig mit der Kurbelwelle 1' der Brennkraftmaschine 1 und/oder Nebenaggregaten 62, 63 derselben, wie Lichtmaschine, Generator, Pumpen, Luftpresser etc., verbunden oder über eine oder mehrere schaltbare Kupplung(en) an- und abkuppelbar, wodurch die Dampfenergie in mechanische Energie umsetzbar ist. Der bzw. die betreffenden Antriebsstränge sind mit 64 bezeichnet.

In allen Anwendungsfällen ist dafür Sorge zu tragen, dass dann, wenn der Wärmetauscher 12 nach einer Phase der Aufheizung des Mediums durch Umschaltung der Umschaltventile 35, 36, 38; 49, 50 wieder aus dem Medium-Kreislauf herausgenommen und über die Bypassleitung 37, 51 überbrückt ist, sich das dann noch in der abgetrennten Schaltstrecke zwischen den Umschaltventilen 35, 36 (Fig. 6) bzw. 35, 38 (Fig. 7) bzw. 49, 50 (Fig. 8, 9, 10) befindliche, im Wärmetauscher 12 erhitzte Medium entspannen kann. Hierzu ist an geeigneter Stelle dieser Schaltstrecke ein Überdruckventil 65 angeschlossen, das mit einem Entspannungs- und Abkühlraum 66 für das abgeleitete Medium kommuniziert. Aus diesem kann das Medium dann z. B. einem Mediumausgleichs- oder -vorratsbehälter 67 (siehe Fig. 6, 7) oder über ein nur in Einspeiserichtung durchlässiges Rückschlagventil 68 (siehe Fig. 8, 9, 10) wieder in den Medium-Kreislauf 3, 3' eingespeist werden.

Außerdem ist in allen Anwendungsfällen eine vorzugsweise elektronische, rechnergestützt arbeitende Regel- und Steuereinrichtung vorgesehen, die per Programm und vorgegebener eingespeicherter Sollwerte anhand ihr zugeführter Istwerte, wie wärmeabnehmerseitige Temperaturwerte sowie Strömungs- und Druckwerte in den Medium-Kreisläufen 3, 3' 57, den Betrieb und die Drehzahlen der Pumpen 34, 48, 58 sowie die Schaltung/Umschaltung der Umschaltventile 35, 36, 38, 49, 50 für Aktivierung und Deaktivierung des Wärmetauschers 12 als Heizquelle steuert.

Generell ist außerdem, dass der Wärmetauscher 12 an der Abgasturbine 4 des Abgasturboladers in gewissem Maße auch als Kühlorgan fungieren kann, weil er das Turbinengehäuse außen zumindest teilweise abschirmt und so dessen nach außen wirkende Hitzeabstrahlung insbesondere in Verbindung mit dem durchströmenden Medium reduziert. Dadurch können äußere Wärmedämmungen oder Abschirmungen entweder ganz entfallen oder müssen nur reduziert bzw. vereinfacht realisiert werden.

## Patentansprüche

1. Fahrzeug oder stationäre Kraftanlage, mit einer mittels Abgasturbolader (2) aufgeladenen Brennkraftmaschine (1) als Antriebsquelle und mit Komponenten, die von einem in einem geschlossenen Kreislauf (3, 3') aufgenommenen Medium her mit Wärme versorgbar sind, wobei die Turbine (4) des Abgasturboladers (2) als Heizquelle herangezogen und/oder ausgebildet ist und hierzu außen am Turbinengehäuse (10) ein Wärmetauscher (12) angeordnet ist, der in den Medium-Kreislauf (3, 3') eingebunden oder einschaltbar ist und in dessen Innenraum (13) das hindurchgeleitete Medium unter Ausnutzung wenigstens der thermischen Abstrahlungsenergie des heißen Turbinengehäuses (10) aufheizbar ist, wobei
das aufzuheizende Medium kanalisiert oder verrohrt durch den Innenraum (13) des Wärmetauschers (12) hindurchleitbar ist, **dadurch gekennzeichnet,**
**dass** in den Innenraum (13) des Wärmetauschers (12) zusätzlich Abgas einspeisbar und durch ihn hindurchleitbar ist und dabei der Wärmeinhalt des Abgases zusätzlich zur Aufheizung des Mediums mit heranziehbar ist.

2. Fahrzeug oder stationäre Kraftanlage nach Anspruch 1, **dadurch gekennzeichnet, dass** der Wärmetauscher (12) mit seinem Gehäuse (14) außen am Turbinengehäuse (10) der Abgasturbine (2) angebaut ist und dabei mit seiner Anlagefläche (17) an den für den Anbau vorgesehenen Außenbereich des Turbinengehäuses (10) formmäßig angepasst und für optimalen Wärmeübergang innig angeschmiegt ist.

3. Fahrzeug oder stationäre Kraftanlage nach Anspruch 1, **dadurch gekennzeichnet, dass** der Wärmetauscher (12) integraler Bestandteil der Abgasturbine (4) ist und dass hierzu das Gehäuse (14) des Wärmetauschers (12) durch die Außenwand (15) des Turbinengehäuses (10) und eine weitere, an der Turbinengehäuse-Außenwand (15) mit angegossenen oder befestigten Gehäuseaußenwand (16) gebildet ist.

4. Fahrzeug oder stationäre Kraftanlage nach einem der Ansprüche 2 und 3, **dadurch gekennzeichnet, dass** am Gehäuse (14) des Wärmetauschers (12) an einem ersten Anschluss (20) eine Zuleitung (22) für das aufzuheizende Medium und an einem zweiten, vom ersten (20) räumlich beabstandeten Anschluss (21) eine Abführleitung (23) für das aufgeheizte Medium angeschlossen ist.

5. Fahrzeug oder stationäre Kraftanlage nach Anspruch 4, **dadurch gekennzeichnet, dass** sich zwischen erstem Anschluss (20) und zweitem Anschluss (21) am Wärmetauscher (12) ein Wärmetauscherrohr (24) erstreckt, mit dem das aufzuheizende Medium kanalisiert bzw. verrohrt durch den Innenraum (13) des Wärmetauschers (12) hindurchleitbar ist.

6. Fahrzeug oder stationäre Kraftanlage nach Anspruch 5, **dadurch gekennzeichnet, dass** das Wärmetauschrohr (24) außen mit wärmeübertragenden Rippen (29) versehen ist.

7. Fahrzeug oder stationäre Kraftanlage nach Anspruch 5, **dadurch gekennzeichnet, dass** das Wärmetauscherrohr (24) sich gerade oder in mäandernder Form zwischen den beiden Anschlüssen (20, 21) erstreckt.

8. Fahrzeug oder stationäre Kraftanlage nach Anspruch 4, **dadurch gekennzeichnet, dass** sich zwischen ersten Anschluss (20) und zweiten Anschluss (21) des Wärmetauschers (12) ein zwischen zwei endseitig angeordneten Sammelräumen gefasstes Wärmetauscherrohrbündel erstreckt.

9. Fahrzeug oder stationäre Kraftanlage nach einem der Ansprüche 5 bis 8, **dadurch gekennzeichnet, dass** das Wärmetauscherrohr (24) oder das Wärmetauscherrohrbündel Bestandteil einer Wärmetauscherkartusche ist, die auch die beiden Anschlüsse (20, 21) enthält sowie vorgefertigt in das Wärmetauschergehäuse (14) einbaubar ist und sich dann zwischen Zuleitung (22) und Abführleitung (23) erstreckt.

10. Fahrzeug oder stationäre Kraftanlage nach einem der Ansprüche 5 bis 8, **dadurch gekennzeichnet, dass** das Wärmetauscherrohr (24) oder die Wärmetauscherrohre zusätzlich mittels Abgas beheizbar ist bzw. sind, das aus dem Abgastrakt vor oder eingangs der Abgasturbine (4) abzweigbar und kanalisiert in den Innenraum (13) des Wärmetauschers (12) einspeisbar und dann - nach einer gewissen wärmeabgebenden Verweildauer - aus diesem an einer von der Einleitstelle (28) entfernten Stelle wieder in den Abgastrakt (30) ausgangs der bzw. nach Abgasturbine (4) ausleitbar ist.

11. Fahrzeug oder stationäre Kraftanlage nach einem der Ansprüche 1 und 2, **dadurch gekennzeichnet, dass** der Wärmetauscher (12) durch ein Wärmetauscherrohr (18) gebildet ist, das gebogen oder mäandernd außen am Turbinengehäuse (10) der Abgasturbine (2)
- formmäßig an dessen Außenseite angepasst und für optimalen Wärmeübergang innig an diese angeschmiegt - befestigt ist.

12. Fahrzeug oder stationäre Kraftanlage nach Anspruch 11, **dadurch gekennzeichnet, dass** das Wärmetauschrohr (18) eingangs einen ersten Anschluss (32), an dem eine Zuleitung (22) für das aufzuheizende Medium befestigt ist, und ausgangs einen zweiten Anschluss (33) aufweist, an dem eine Abführleitung (23) für das aufgeheizte Medium befestigt ist.

13. Fahrzeug oder stationäre Kraftanlage nach einem der vorhergehenden Ansprüche, **dadurch gekennzeichnet, dass** im Medium-Kreislauf (3, 3') eine Pumpe (34) für die Umwälzung des Mediums sorgt, und dass der Wärmetauscher (12) über die Zuleitung (22) und Abführleitung (23) bedarfsweise durch schaltbare Umschaltventile (35, 36; 38) in den Medium-Kreislauf (3) ein- und wieder aussteuerbar ist, wobei das erste (35) und zweite Umschaltventil (36) über einen Leitungsabschnitt (37) miteinander verbunden sind, der im Fall der Nichteinbindung des Wärmetauschers (12) diesen dann im Medium-Kreislauf (3, 3') als Bypass überbrückt.

14. Fahrzeug oder stationäre Kraftanlage nach Anspruch 13, **dadurch gekennzeichnet, dass** es sich bei dem Medium um das flüssige Kühlmittel - Kühlwasser bzw. mit Frostschutzmittel gemischtes Kühlwasser - der Brennkraftmaschine (1) und bei dem zugehörigen Medium-Kreislauf (3) um den Kühlkreislauf der Brennkraftmaschine (1) handelt, in den der Wärmetauscher (12) über seine Zuleitung (22) und Rückleitung (23) bedarfsweise über die schaltbaren Umschaltventile (35, 36) einsteuerbar ist, insbesondere für rasche Aufwärmung des Kühlmittels nach einem Kaltstart der Brennkraftmaschine abhängig von einer temperaturgeführten Regelung/Steuerung.

15. Fahrzeug oder stationäre Kraftanlage nach Anspruch 14, **dadurch gekennzeichnet, dass** zusätzlich zum ersten (35) und zweiten Umschaltventil (36) ein drittes Umschaltventil (38) vorgesehen ist, das mit dem zweiten (36) über einen Leitungsabschnitt (39) und mit der Abführleitung (23) des Wärmetauschers (12) in Verbindung steht, und dass am zweiten (36) und dritten Umschaltventil (38) ein über einen Behälter oder sonstigen Wärmeabnehmer (42) führender Heizkreis (40) angeschlossen ist, der bedarfsweise über die entsprechend umgeschalteten Umschaltventile (35, 36, 38) in Reihe zum Wärmetauscher (12) in den Medium-Kreislauf (3) einschaltbar ist, und zwar temperaturgeführt durch eine Steuerung/Regelung mit entsprechender Einflussnahme auf die Schaltstellung der drei Umschaltventile (35, 36, 38).

16. Fahrzeug oder stationäre Kraftanlage nach Anspruch 13, **dadurch gekennzeichnet, dass** der Wärmetauscher (12) in einen autarken, von der Brennkraftmaschine (1) und deren Kühlkreislauf unabhängigen Medium-Kreislauf (3') einschaltbar bzw. eingebunden ist, in dem eine Pumpe (48) für die Umwälzung des Mediums sorgt und zwei durch einen Leitungsabschnitt (51) verbundene Umschaltventile (49, 50) vorgesehen sind, mit denen je nach Einstellung die Einschaltung des Wärmetauschers (12) in den Medium-Kreislauf (3') oder eine Überbrückung des Wärmetauschers (12) über den dann als Bypass fungierenden Leitungsabschnitt (51) steuerbar ist.

17. Fahrzeug oder stationäre Kraftanlage nach einem der Ansprüche 15 und 16, **dadurch gekennzeichnet, dass** über den Medium-Kreislauf (3, 3') sowie den darin eingeschalteten Heizkreis (40) eine im Wärmeabnehmer (42, 47), insbesondere Behälter, eingeschlossene bzw. bevorratete Flüssigkeit abhängig von einer temperaturgeführten Regelung/Steuerung erwärmbar bzw. aufheizbar oder am Einfrieren hinderbar oder nach Einfrieren nach einem Kaltstart der Brennkraftmaschine auftaubar ist.

18. Fahrzeug oder stationäre Kraftanlage nach einem der Ansprüche 15 bis 17, **dadurch gekennzeichnet, dass** es sich bei dem Wärmeabnehmer (42, 47) um einen Behälter, insbesondere solchen eines Fahrzeugs, handelt, wie
- einen Vorratsbehälter für eine Harnstoffwasserlösung, oder
- einen Vorratsbehälter für eine Windschutzscheiben- und/oder Scheinwerfer- und/ oder Außenspiegelreinigungsflüssigkeit, oder
- einen kühlwasserführenden Kühler, oder
- einen Kühlwasser aufnehmenden Ausgleichsbehälter, oder
- eine elektrische Speicher-Batterie, oder
- einen Heizkörper, oder
- einen Warmwasserbehälter, z. B. in Bordküchen von Omnibussen oder Wohnmobilen, oder
- einen Spülwasservorratsbehälter, z. B. in Bordtoiletten von Omnibussen oder Wohnmobilen.

19. Fahrzeug oder stationäre Kraftanlage nach Anspruch 13, **dadurch gekennzeichnet, dass** der Medium-Kreislauf (3, 3') als Wärmeabnehmer (47) einen Wärmetauscher aufweist, über dessen Innenraum (54) ein Sekundärmedium-Kreislauf (57) führt, in dem mittels einer Pumpe (58) ein Sekundärmedium umwälzbar ist, das durch ein im Innenraum (54) des Wärmetauschers angeordnetes Wärmetauscherrohr oder -rohrbündel (59) leitbar ist, dem Wärme aus dem ersten Medium-Kreislauf (3, 3') zuführbar ist und das die aufgenommene Wärme an das Sekundärmedium zu dessen Erwärmung abgibt, welches erwärmte Sekundärmedium einem in den Sekundärmediumkreislauf (57) eingeschalteten Wärmeabnehmer (60) wie Verbraucher oder Wärmespeicher zuführbar ist.

20. Fahrzeug oder stationäre Kraftanlage nach Anspruch 13, **dadurch gekennzeichnet, dass** es sich bei dem Medium um eine niedrig-siedende Flüssigkeit handelt, die in einem geschlossenen Medium-Kreislauf (3') aufgenommen und bei Durchströmen des Wärmetauschers (12) in ihren dampfförmigen Aggregatszustand überführbar ist.

21. Fahrzeug oder stationäre Kraftanlage nach Anspruch 20, **dadurch gekennzeichnet, dass** das im Wärmetauscher (12) in dampfförmigen Aggregatzustand überführte Medium einer in den Medium-Kreislauf (3') integrierten, als Wärmeabnehmer (47) fungierende Dampfturbine (61) zuführbar und dort leistungsabgebend wirksam ist, welche Dampfturbine (61) über einen oder mehrere Antriebsstränge (64) mit der Kurbelwelle (1') der Brennkraftmaschine (1) und/oder Nebenaggregaten (62, 63) derselben verbunden oder über schaltbare Kupplung(en) an- und abkuppelbar ist und so die Dampfenergie in mechanische Antriebsenergie umsetzbar ist.

22. Fahrzeug oder stationäre Kraftanlage nach einem der vorhergehenden Ansprüche, **dadurch gekennzeichnet, dass** an der über den Wärmetauscher (12) führenden und sich zwischen den Umschaltventilen (35, 36 bzw. 35, 38 bzw. 49, 50) erstreckenden Schaltstrecke an geeigneter Stelle ein Überdruckventil (65) angeschlossen ist, über das bei abgesperrter, nicht in den Medium-Kreislauf (3, 3') eingebundener Schaltstrecke das sich noch darin befindliche erhitzte Medium in einen nachfolgenden Entspannungs- und Abkühlraum (66) hinein entspannen kann.

23. Fahrzeug oder stationäre Kraftanlage nach einem der Ansprüche 1 bis 21, **dadurch gekennzeichnet, dass** eine elektronische, rechnergestützt arbeitende Regel- und Steuereinrichtung vorgesehen ist, die per Programm und vorgegebener eingespeicherter Sollwerte anhand ihr zugeführter Istwerte, wie wärmeabnehmerseitig erfasste Temperaturwerte sowie im Medium-Kreislauf (3, 3', 57) erfasste Strömungs- und Druckwerte den Betrieb und die Drehzahlen der Pumpen (34, 48, 58) sowie die Schaltung/Umschaltung der Umschaltventile (35, 36, 38, 49, 50) für Aktivierung und Deaktivierung des Wärmetauschers (12) als Heizquelle steuert.

## Claims

1. Vehicle or stationary power installation having an internal combustion engine (1) charged by means of an exhaust-gas turbocharger (2) as drive source, and having components which are supplied with heat by a medium accommodated in a closed circuit (3, 3'), wherein the turbine (4) of the exhaust gas turbocharger (2) is used and/or formed as a heat source and, for this purpose, a heat exchanger (12) is arranged on the outside of the turbine housing (10), is incorporated in the medium circuit (3, 3') or can be connected thereto, and in the interior (13) of which the medium led through can be heated up by utilising at least the thermal radiation energy of the hot turbine housing (10),
wherein the medium to be heated can be channelled or piped through the interior (13) of the heat exchanger (12),
**characterized in that**
additional exhaust gas can be fed into the interior (13) of the heat exchanger (12) and led through the latter and the heat content of the exhaust gas can thus be used additionally for the heating of the medium.

2. Vehicle or stationary power installation according to Claim 1, **characterized in that** the heat exchanger (12) is attached by its housing (14) to the outside of the turbine housing (10) of the exhaust-gas turbine (2) and is matched in terms of shape with its contact surface (17) to the outer region of the turbine housing (10) provided for the attachment, and is intimately nestled for optimal heat transfer.

3. Vehicle or stationary power installation according to Claim 1, **characterized in that** the heat exchanger (12) is an integral constituent part of the exhaust gas turbine (4), and **in that**, for this purpose, the housing (14) of the heat exchanger (12) is formed by the outer wall (15) of the turbine housing (10) and a further housing outer wall (16) co-cast with or fixed to the turbine housing outer wall (15).

4. Vehicle or stationary power installation according to either of Claims 2 and 3, **characterized in that** a feed line (22) for the medium to be heated is connected to the housing (14) of the heat exchanger (12) at a first connection (20), and a discharge line (23) for the heated medium is connected to a second connection (21), spaced apart physically from the first (20).

5. Vehicle or stationary power installation according to Claim 4, **characterized in that** a heat exchange pipe (24), with which the medium to be heated can be channelled or piped through the interior (13) of the heat exchanger (12), extends between a first connection (20) and a second connection (21) on the heat exchanger (12).

6. Vehicle or stationary power installation according to Claim 5, **characterized in that** the heat exchange pipe (24) is provided on the outside with heat-exchanging ribs (29).

7. Vehicle or stationary power installation according to Claim 5, **characterized in that** the heat exchanger pipe (24) extends straight or in a meandering form between the two connections (20, 21).

8. Vehicle or stationary power installation according to Claim 4, **characterized in that** a heat exchange pipe bundle held between two collecting chambers arranged at the ends extends between the first connection (20) and the second connection (21) of the heat exchanger (12).

9. Vehicle or stationary power installation according to one of Claims 5 to 8, **characterized in that** the heat exchange pipe (24) or the heat exchange pipe bundle is a constituent part of a heat exchange cartridge, which also contains the two connections (20, 21) and can be installed in prefabricated form into the heat exchanger housing (14) and then extends between feed line (22) and discharge line (23).

10. Vehicle or stationary power installation according to one of Claims 5 to 8, **characterized in that** the heat exchange pipe (24) or the heat exchange pipes can be additionally heated by means of exhaust gas which can be branched out of the exhaust gas tract upstream of or at the inlet of the exhaust gas turbine (4) and can be fed in channelled form into the interior (13) of the heat exchanger (12) and then - after a certain heat-discharging residence time - can be led out of the latter again at a location remote from the inlet location (28) into the exhaust gas tract (30) at the outlet of or downstream of the exhaust gas turbine (4).

11. Vehicle or stationary power installation according to either of Claims 1 and 2, **characterized in that** the heat exchanger (12) is formed by a heat exchange pipe (18) which is fixed in curved or meandering form to the outside of the turbine housing (10) of the exhaust gas turbine (2) - matched in terms of shape to the outside of the latter and nestled intimately on the latter for optimal heat transfer.

12. Vehicle or stationary power installation according to Claim 11, **characterized in that** the inlet of the heat exchange pipe (18) has a first connection (32), to which a feed line (22) for the medium to be heated is fixed, and the outlet has a second connection (33), to which a discharge line (23) for the heated medium is fixed.

13. Vehicle or stationary power installation according to one of the preceding claims, **characterized in that** a pump (34) ensures circulation of the medium in the medium circuit (3, 3'), and **in that** the heat exchanger (12) can be controlled on and off again as required via the feed line (22) and discharge line (23) by controllable changeover valves (35, 36; 38) in the medium circuit (3), wherein the first (35) and second changeover valve (36) are connected to each other via a line section (37) which, in the event that the heat exchanger (12) is not incorporated, then bridges the latter as a bypass in the medium circuit (3, 3').

14. Vehicle or stationary power installation according to Claim 13, **characterized in that** the medium is the liquid coolant - cooling water or cooling water mixed with frost prevention agent - from the internal combustion engine (1), and the associated medium circuit (3) is the cooling circuit of the internal combustion engine (1), in which the heat exchanger (12) can be controlled as necessary via its feed line (22) and return line (23) via the controllable changeover valves (35, 36), in particular for rapid heating of the coolant following a cold start of the internal combustion engine, depending on a temperature-based closed-loop/open-loop control system.

15. Vehicle or stationary power insulation according to Claim 14, **characterized in that** in addition to the first (35) and second changeover valve (36), a third changeover valve (38) is provided, which is connected to the second (36) via a line section (39) and to the discharge line (23) of the heat exchanger (12), and **in that** a heating circuit (40) leading via a container or other heat consumer (42) is connected to the second (36) and third changeover valve (38), and can be connected as required via the appropriately controlled changeover valves (35, 36, 38) in series with a heat exchanger (12) in the medium circuit (3), specifically on the basis of temperature, by an open-loop/closed-loop control system with an appropriate influence on the switching position of the three changeover valves (35, 36, 38).

16. Vehicle or stationary power installation according to Claim 13, **characterized in that** the heat exchanger (12) can be connected or incorporated in an autonomous medium circuit (3') independent of the internal combustion engine (1) and its cooling circuit, in which a pump (48) ensures circulation of the medium and two changeover valves (49, 50) connected by a line section (51) are provided, with which, depending on the setting, the connection of the heat exchanger (12) into the medium circuit (3') or bridging of the heat exchanger (12) via the line section (51), then functioning as a bypass, can be controlled.

17. Vehicle or stationary power installation according to either of Claims 15 and 16, **characterized in that** via the medium circuit (3, 3') and the heating circuit (40) then connected thereto, a liquid enclosed or stored in the heat consumer (42, 47), in particular container, can be warmed or heated, depending on a temperature-based closed-loop/open-loop control system, can be prevented from freezing or, after freezing, can be thawed following a cold start of the internal combustion engine.

18. Vehicle or stationary power installation according to one of Claims 15 to 17, **characterized in that** the heat consumer (42, 47) is a container, in particular one such of a vehicle, such as
- a storage container for a urea-water solution, or
- a storage container for a windscreen and/or headlight and/or exterior mirror cleaning liquid, or
- a radiator carrying cooling water, or
- a compensating container accommodating cooling water, or
- an electric storage battery, or
- a heating element, or
- a warm-water container, for example in the on-board kitchen of buses or motor-homes, or
- a flush-water storage container, for example in on-board toilets of buses or motor-homes.

19. Vehicle or stationary power installation according to Claim 13, **characterized in that** the medium circuit (3, 3') has a heat exchanger as heat consumer (47), via the interior (54) of which a secondary medium circuit (57) leads, in which, by means of a pump (58), a secondary medium can be circulated, which can be conducted through a heat exchange pipe or heat exchange pipe bundle (59) arranged in the interior (54) of the heat exchanger, to which heat from the first medium circuit (3, 3') can be supplied and which discharges the heat picked up to the secondary medium to heat the latter, which warmed secondary medium can be supplied to a heat consumer (60) such as a consumer or heat reservoir, connected into the secondary medium circuit (57).

20. Vehicle or stationary power insulation according to Claim 13, **characterized in that** the medium is a low boiling-point liquid, which is accommodated in a closed medium circuit (3') and, as it flows through the heat exchanger (12), can be transferred into its vaporous state.

21. Vehicle or stationary power installation according to Claim 20, **characterized in that** the medium transferred into a vaporous state in the heat exchanger (12) can be supplied to a steam turbine (61) integrated into the medium circuit (3') and functioning as a heat consumer (47) and is effective in delivering power, which steam turbine (61) is connected via one or more drive trains (64) to the crankshaft (1') of the internal combustion engine (1) and/or secondary units (62, 63) of the same, or can be coupled thereto and uncoupled therefrom via controllable coupling(s), and thus the steam energy can be converted into mechanical drive energy.

22. Vehicle or stationary power insulation according to one of the preceding claims, **characterized in that** an overpressure valve (65) is connected to the switching section leading via the heat exchanger (12) and extending between the changeover valves (35, 36 or 35, 38 or 49, 50) at a suitable location, via which valve, when the switching section is shut off and not incorporated in the medium circuit (3, 3'), the heated medium still located therein can expand into a subsequent expansion and cooling chamber (66).

23. Vehicle or stationary power installation according to one of Claims 1 to 21, **characterized in that** an electronic closed-loop and open-loop control device operating with computer assistance is provided, which, via a program and predefined stored target values and using actual values supplied thereto, such as temperature values acquired on the heat consumer side as well as flow and pressure values acquired in the medium circuit (3, 3', 57), controls the operation and the rotational speeds of the pumps (34, 48, 58) and the switching/changing over of the changeover valves (35, 36, 38, 49, 50) for activating and deactivating the heat exchanger (12) as a heat source.

## Revendications

1. Véhicule ou centrale stationnaire, comprenant un moteur à combustion interne (1) suralimenté au moyen d'un turbocompresseur à gaz d'échappement (2) en tant que source d'entraînement et comprenant des composants qui peuvent être alimentés en chaleur à partir d'un fluide reçu dans un circuit fermé (3, 3'), la turbine (4) du turbocompresseur à gaz d'échappement (2) étant utilisée et/ou réalisée en tant que source de chaleur et un échangeur de chaleur (12) étant disposé à cet effet à l'extérieur au niveau du carter de turbine (10), lequel est incorporé ou peut être connecté dans le circuit de fluide (3, 3') et dans l'espace intérieur (13) duquel le fluide introduit peut être chauffé en utilisant au moins l'énergie de rayonnement thermique du carter de turbine chaud (10),
le fluide à chauffer pouvant être guidé par une canalisation ou un système de conduite à travers l'espace intérieur (13) de l'échangeur de chaleur (12), caractérisé(e) en ce que
du gaz d'échappement peut en outre être injecté dans l'espace intérieur (13) de l'échangeur de chaleur (12) et peut être guidé à travers lui, et en l'occurrence l'apport thermique du gaz d'échappement peut en outre être utilisé pour chauffer le fluide.

2. Véhicule ou centrale stationnaire selon la revendication 1, caractérisé(e) en ce que l'échangeur de chaleur (12) est monté avec son carter (14) à l'extérieur sur le carter de turbine (10) de la turbine à gaz d'échappement (2), et en l'occurrence est adapté de par sa forme à la région extérieure du carter de turbine (10) prévue pour l'installation et l'épouse intimement, avec sa surface d'appui (17), en vue d'un transfert thermique optimal.

3. Véhicule ou centrale stationnaire selon la revendication 1, caractérisé(e) en ce que l'échangeur de chaleur (12) fait partie intégrante de la turbine à gaz d'échappement (4) et en ce qu'à cet effet, le carter (14) de l'échangeur de chaleur (12) est formé par la paroi extérieure (15) du carter de turbine (10) et par une paroi extérieure supplémentaire (16) du carter coulée ou fixée à la paroi extérieure (15) du carter de turbine.

4. Véhicule ou centrale stationnaire selon l'une quelconque des revendications 2 et 3, caractérisé(e) en ce qu'au niveau du carter (14) de l'échangeur de chaleur (12) au niveau d'un premier raccord (20) est raccordée une conduite d'alimentation (22) pour le fluide à chauffer et au niveau d'un deuxième raccord (21) espacé physiquement du premier (20) est raccordée une conduite d'évacuation (23) pour le fluide chauffé.

5. Véhicule ou centrale stationnaire selon la revendication 4, caractérisé(e) en ce qu'entre le premier raccord (20) et le deuxième raccord (21) au niveau de l'échangeur de chaleur (12) s'étend un tube d'échangeur de chaleur (24), avec lequel le fluide à chauffer peut être guidé par une canalisation ou un système de conduite à travers l'espace intérieur (13) de l'échangeur de chaleur (12).

6. Véhicule ou centrale stationnaire selon la revendication 5, caractérisé(e) en ce que le tube d'échangeur de chaleur (24) est pourvu à l'extérieur d'ailettes de transfert thermique (29).

7. Véhicule ou centrale stationnaire selon la revendication 5, caractérisé(e) en ce que le tube d'échangeur de chaleur (24) s'étend en ligne droite ou en méandres entre les deux raccords (20, 21).

8. Véhicule ou centrale stationnaire selon la revendication 4, caractérisé(e) en ce qu'un faisceau de tubes d'échangeur de chaleur réuni entre deux espaces collecteurs disposés du côté de l'extrémité s'étend entre le premier raccord (20) et le deuxième raccord (21) de l'échangeur de chaleur (12).

9. Véhicule ou centrale stationnaire selon l'une quelconque des revendications 5 à 8, caractérisé(e) en ce que le tube d'échangeur de chaleur (24) ou le faisceau de tubes d'échangeur de chaleur fait partie d'une cartouche d'échangeur de chaleur qui contient également les deux raccords (20, 21) et qui peut être installée sous forme préfabriquée dans le carter d'échangeur de chaleur (14) et qui s'étend alors entre la conduite d'alimentation (22) et la conduite d'évacuation (23).

10. Véhicule ou centrale stationnaire selon l'une quelconque des revendications 5 à 8, caractérisé(e) en ce que le tube d'échangeur de chaleur (24) ou les tubes d'échangeur de chaleur peut ou peuvent être chauffés en outre au moyen de gaz d'échappement qui peut être prélevé dans la ligne d'échappement avant ou à l'entrée de la turbine à gaz d'échappement (4) et qui peut être injecté de manière canalisée dans l'espace interne (13) de l'échangeur de chaleur (12) puis, après une certaine durée de séjour dégageant de la chaleur, peut être évacué hors de celui-ci à un endroit éloigné de la zone d'entrée (28) à nouveau dans la ligne d'échappement (30) à la sortie de ou après la turbine à gaz d'échappement (4).

11. Véhicule ou centrale stationnaire selon l'une quelconque des revendications 1 et 2, caractérisé(e) en ce que l'échangeur de chaleur (12) est formé par un tube d'échangeur de chaleur (18) qui est fixé sous forme courbe ou en méandres à l'extérieur au niveau du carter de turbine (10) de la turbine à gaz d'échappement (2), de manière adaptée de par sa forme à son côté extérieur et, en vue d'un transfert thermique optimal, épousant étroitement celui-ci.

12. Véhicule ou centrale stationnaire selon la revendication 11, caractérisé(e) en ce que le tube d'échangeur de chaleur (18) présente au niveau de l'entrée un premier raccord (32) au niveau duquel est fixée une conduite d'alimentation (22) pour le fluide à chauffer, et au niveau de la sortie un deuxième raccord (33) au niveau duquel est fixée une conduite d'évacuation (23) pour le fluide chauffé.

13. Véhicule ou centrale stationnaire selon l'une quelconque des revendications précédentes, caractérisé(e) en ce que dans le circuit de fluide (3, 3'), une pompe (34) assure la circulation du fluide et en ce que l'échangeur de chaleur (12) peut être connecté et à nouveau déconnecté dans le circuit de fluide (3), au besoin, par le biais de la conduite d'alimentation (22) et de la conduite d'évacuation (23) par des soupapes de commutation commutables (35, 36 ; 38), la première (35) et la deuxième (36) soupape de commutation étant connectées l'une à l'autre par le biais d'une portion de conduite (37) qui, dans le cas où l'échangeur de chaleur (12) n'est pas incorporé, surmonte alors celui-ci en tant que dérivation dans le circuit de fluide (3, 3').

14. Véhicule ou centrale stationnaire selon la revendication 13, caractérisé(e) en ce que le fluide est un réfrigérant liquide, de l'eau de refroidissement ou de l'eau de refroidissement mélangée avec un antigel, du moteur à combustion interne (1) et le circuit de fluide associé (3) est le circuit de refroidissement du moteur à combustion interne (1), dans lequel l'échangeur de chaleur (12) peut être commandé par le biais de sa conduite d'alimentation (22) et de sa conduite de retour (23) au besoin par le biais des soupapes de commutation commutables (35, 36), en particulier pour chauffer rapidement le réfrigérant après un démarrage à froid du moteur à combustion interne en fonction d'un réglage/d'une commande à température contrôlée.

15. Véhicule ou centrale stationnaire selon la revendication 14, caractérisé(e) en ce qu'en plus de la première (35) et de la deuxième soupape de commutation (36), il est prévu une troisième soupape de commutation (38) qui est en liaison avec la deuxième soupape de commutation (36) par le biais d'une portion de conduite (39) et avec la conduite d'évacuation (23) de l'échangeur de chaleur (12), et en ce qu'au niveau de la deuxième soupape de commutation (36) et de la troisième soupape de commutation (38) est raccordé un circuit de chauffage (40) passant par un récipient ou un autre consommateur de chaleur (42), lequel peut être connecté au besoin par le biais des soupapes de commutation commutées de manière correspondante (35, 36, 38) en série avec l'échangeur de chaleur (12) dans le circuit de fluide (3) et ce avec contrôle de la température par commande/réglage avec une influence correspondante sur la position de commutation des trois soupapes de commutation (35, 36, 38).

16. Véhicule ou centrale stationnaire selon la revendication 13, caractérisé(e) en ce que l'échangeur de chaleur (12) peut être branché ou incorporé dans un circuit de fluide autarcique (3') indépendant du moteur à combustion interne (1) et de son circuit de refroidissement, dans lequel une pompe (48) assure la circulation du fluide et dans lequel deux soupapes de commutation (49, 50) connectées par une portion de conduite (51) sont prévues, avec lesquelles, selon l'ajustement, la connexion de l'échangeur de chaleur (12) dans le circuit de fluide (3') ou un contournement de l'échangeur de chaleur (12) par le biais de la portion de conduite (51) servant alors de dérivation, peuvent être commandés.

17. Véhicule ou centrale stationnaire selon l'une quelconque des revendications 15 et 16, caractérisé(e) en ce que par le biais du circuit de fluide (3, 3') ainsi que du circuit de chauffage (40) connecté dans celui-ci, un liquide incorporé ou stocké dans le consommateur de chaleur (42, 47), en particulier le récipient, peut être chauffé ou réchauffé ou peut être protégé contre le gel en fonction d'un réglage/d'une commande à température contrôlée, ou peut être dégelé après qu'il a gelé, après un démarrage à froid du moteur à combustion interne.

18. Véhicule ou centrale stationnaire selon l'une quelconque des revendications 15 à 17, caractérisé(e) en ce que le consommateur de chaleur (42, 47) est un récipient, en particulier un récipient d'un véhicule tel que
- un réservoir pour une solution d'urée et d'eau, ou
- un réservoir pour un liquide de lavage de pare-brise et/ou de phare et/ou de rétroviseur extérieur, ou
- un radiateur guidant de l'eau de refroidissement, ou
- un réservoir de compensation recevant de l'eau de refroidissement, ou
- une batterie-accumulateur électrique, ou
- un corps chauffant, ou
- un réservoir d'eau chaude, par exemple dans des cuisines de bord d'omnibus ou de caravanes, ou
- un réservoir d'eau de rinçage, par exemple dans des toilettes de bord d'omnibus ou de caravanes.

19. Véhicule ou centrale stationnaire selon la revendication 13, caractérisé(e) en ce que le circuit de fluide (3, 3') présente, en tant que consommateur de chaleur (47), un échangeur de chaleur par le biais de l'espace intérieur duquel (54) passe un circuit de fluide secondaire (57), dans lequel un fluide secondaire peut être mis en circulation au moyen d'une pompe (58), lequel peut être conduit à travers un tube ou un faisceau de tubes (59) d'échangeur de chaleur disposé dans l'espace intérieur (54) de l'échangeur de chaleur, auquel de la chaleur peut être acheminée à partir du premier circuit de fluide (3, 3') et qui fournit la chaleur reçue au fluide secondaire en vue de le chauffer, lequel fluide secondaire chauffé peut être acheminé à un consommateur de chaleur (60) connecté dans le circuit de fluide secondaire (57), tel qu'un consommateur ou un accumulateur de chaleur.

20. Véhicule ou centrale stationnaire selon la revendication 13, caractérisé(e) en ce que le fluide est un liquide à bas point d'ébullition, qui est reçu dans un circuit de fluide fermé (3') et qui peut être transféré dans son état physique en phase vapeur lors de sa circulation à travers l'échangeur de chaleur (12).

21. Véhicule ou centrale stationnaire selon la revendication 20, caractérisé(e) en ce que le fluide ayant passé à l'état physique en phase vapeur dans l'échangeur de chaleur (12) peut être acheminé à une turbine à vapeur (61) intégrée dans le circuit de fluide (3'), servant de consommateur de chaleur (47), et peut y agir en fournissant de la puissance, laquelle turbine à vapeur (61) est connectée par le biais d'une ou plusieurs chaînes cinématiques (64) au vilebrequin (1') du moteur à combustion interne (1) et/ou à des groupes auxiliaires (62, 63) de celui-ci, ou peut être accouplée ou désaccouplée par le biais d'un ou plusieurs accouplements commutables, et de ce fait l'énergie de vapeur peut être convertie en énergie d'entraînement mécanique.

22. Véhicule ou centrale stationnaire selon l'une quelconque des revendications précédentes, caractérisé(e) en ce qu'au niveau de la section de commutation passant par l'échangeur de chaleur (12) et s'étendant entre les soupapes de commutation (35, 36, respectivement 35, 38, respectivement 49, 50), à un emplacement approprié, est raccordée une soupape de surpression (65) par le biais de laquelle, lorsque la section de commutation est coupée et n'est pas incorporée dans le circuit de fluide (3, 3'), le fluide chauffé se trouvant encore dans celle-ci peut être détendu dans un espace de détente et de refroidissement subséquent (66).

23. Véhicule ou centrale stationnaire selon l'une quelconque des revendications 1 à 21, caractérisé(e) en ce qu'un dispositif de réglage et de commande électronique informatisé, est prévu, lequel par le biais d'un programme et de valeurs de consigne prédéfinies mémorisées, à l'aide de valeurs instantanées qui lui sont acheminées, telles que les valeurs de température détectées du côté du consommateur de chaleur ainsi que les valeurs d'écoulement et de pression détectées dans le circuit de fluide (3, 3', 57) commande le fonctionnement et les vitesses de rotation des pompes (34, 48, 58) ainsi que la commutation/l'inversion des soupapes de commutation (35, 36, 38, 49, 50) pour l'activation et la désactivation de l'échangeur de chaleur (12) en tant que source de chaleur.
